# EUROPÄISCHE PATENTSCHRIFT

(11) **EP 2 413 756 B1**
(45) Veröffentlichungstag und Bekanntmachung des Hinweises auf die Patenterteilung: **29.01.2014**
(21) Anmeldenummer: 10721293.8
(22) Anmeldetag: 02.04.2010
(51) Int. Cl.: A47J 43/10

(54) **ANTRIEBSVORRICHTUNG ZUM ANTREIBEN EINER ARBEITSEINHEIT**
DRIVE DEVICE FOR DRIVING A WORKING UNIT
DISPOSITIF D'ENTRAÎNEMENT POUR ENTRAÎNER UNE UNITÉ DE TRAVAIL

(30) Priorität: 03.04.2009 DE 102009016205
(43) Veröffentlichungstag der Anmeldung: 08.02.2012
(73) Patentinhaber: Leifheit AG, 56377 Nassau (DE)
(72) Erfinder: KLOTZ, Markus, 56357 Hainau (DE); BRAND, Dieter, 56132 Dausenau (DE)
(74) Vertreter: Bungartz, Klaus Peter
(86) Internationale Anmeldenummer: PCT/DE2010/075031
(87) Internationale Veröffentlichungsnummer: WO 2010/112025

(56) Entgegenhaltungen:
- EP-A1- 1 745 728
- WO-A1-2007/009654
- DE-A1- 10 013 250
- DE-B2- 2 258 841
- FR-A1- 2 725 383
- GB-A- 191 319 332

## Beschreibung

Die Erfindung betrifft eine als Zerkleinerungsvorrichtung für Lebensmittel, Rührvorrichtung oder Schleudervorrichtung ausgebildete Vorrichtung mit einem Behälter, einer Antriebsvorrichtung, die ein Gehäuse, eine antreibbare Antriebseinheit und eine mit der Antriebseinheit gekoppelte Drehübertragungseinheit aufweist, und mit einer Arbeitseinheit, die sich über eine Koppeleinrichtung lösbar mit der Drehübertragungseinheit in Eingriff befindet. Zwischen der Antriebsvorrichtung und der Arbeitseinheit ist dabei eine den Behälter abschließende Trenneinheit mit einem, eine Öffnung aufweisenden Trennelement, über dessen Öffnung die Koppelvorrichtung in die Drehübertragungseinheit einführbar ist, angeordnet und die Arbeitseinheit ist innerhalb und die Antriebsvorrichtung außerhalb des Behälters angeordnet. Ferner weist die Antriebsvorrichtung an ihrem zur Trenneinheit gerichteten Ende ein lösbar mit der Antriebsvorrichtung verbundenes Koppelelement auf, das in eine in der Trenneinheit befindliche Aussparung formschlüssig einsetzbar ist.

Ein motorisch angetriebene Zerkleinerungsvorrichtung für Lebensmittel der oben genannten Art ist aus der EP 1 745 728 bekannt. Diese Vorrichtung weist einen Behälter auf, in dem eine Arbeitseinheit, zum Beispiel Schneidmesser, drehbar und über eine Drehübertragungseinheit antreibbar angeordnet ist. Der Behälter ist im oberen Bereich von einer deckelartigen Trenneinheit verschlossen. Die Antriebsspindel ist dabei durch die Trenneinheit hindurchgeführt, oberhalb der Trenneinheit ist ein Anschlussflansch zum Anschließenden einer Antriebsvorrichtung, insbesondere in Form eines Motors, vorgesehen. Die DE 100 13 250 A1 zeigt eine ähnliche Vorrichtung.

Ein Nachteil dieser Vorrichtungen besteht darin, dass der Anschlussflansch über den Deckel nach oben hervorsteht und die Antriebsvorrichtung vergleichsweise aufwändig mit dem Anschlussflansch verbunden werden muss. Antriebsvorrichtungen für ähnliche Vorrichtungen sind ferner in einer Vielzahl von verschiedenen Ausführungsarten bekannt und werden in einer Vielzahl von technischen Gebieten eingesetzt. So ist es bereits bekannt, Antriebsvorrichtungen beispielsweise zum Antreiben von Zerkleinerungselementen für Lebensmittel in Zerkleinerungsvorrichtungen und von Rührelementen für Saucen in Rührvorrichtungen zu verwenden.

Aus der WO2007/009654 A1 ist eine Zerkleinerungsvorrichtung für Lebensmittel bekannt, in der eine Spindel als eine Antriebsvorrichtung zum Antreiben von Zerkleinerungselementen verwendet wird. In dieser Zerkleinerungsvorrichtung ist eine mit den Zerkleinerungselementen verbundene Koppelvorrichtung fest mit der Spindel verbunden. Die Spindel ist zu einem Teil und die Zerkleinerungselemente sind vollständig innerhalb eines Gehäuses der Zerkleinerungsvorrichtung untergebracht.

Eine solche Verbindung der Antriebsvorrichtung mit der Koppelvorrichtung der Zerkleinerungselemente weist eine Vielzahl von Nachteilen auf. So ist es aufgrund der festen Verbindung der Koppelvorrichtung mit der Antriebsvorrichtung nicht möglich, die Antriebsvorrichtung für andere Vorrichtungen, wie z.B. Rührvorrichtungen, zu verwenden. D.h., dass jede Vorrichtung mit einer eigenen Antriebsvorrichtung versehen sein muss, was wiederrum die Produktionskosten der jeweiligen Vorrichtung erhöht. Ein weiterer Nachteil einer solchen Verbindung besteht darin, dass die Vorrichtungen relativ groß werden, wodurch sich der für die einzelne Vorrichtung benötigte Lagerplatz erhöht.

Die DE 22 58 841 B2 zeigt wiederum einen Aufsatz für eine Küchenmaschine, bei dem über einen oberen Einlauftrichter Schneidgut einer Arbeitseinheit, hier beispielsweise in Form eines rotierenden Messersatzes oder einer Raspelplatte, zugeführt wird, dass dann seitlich nach unten, zum Beispiel in die Rührschüssel der Küchenmaschine, herunterfällt. Die Arbeitseinheit ist von unten angetrieben, hierzu ist eine Mehrkantwelle vorgesehen, die in einen korrespondierenden Flansch der Maschine eingesetzt werden kann. Auch dieser Aufsatz muss auf den Antrieb angestimmt sein, darüber hinaus lassen sich Antriebsvorrichtung und Behältern nicht ohne weiteres getrennt voneinander verwenden.

Es ist die Aufgabe der vorliegenden Erfindung, eine Antriebsvorrichtung bereitzustellen, die in einer Vielzahl von Vorrichtungen eingesetzt werden kann. Diese Aufgabe wird erfindungsgemäß durch die Merkmale des Patentanspruchs 1 gelöst. Vorteilhafte Ausgestaltungen der Erfindung sind in den Unteransprüchen gekennzeichnet.

Die Erfindung hat den Vorteil, dass eine Koppelvorrichtung der Arbeitseinheit mit einer Drehübertragungseinheit der Antriebsvorrichtung in Eingriff bringbar ist. Dadurch wird ermöglicht, dass die Antriebsvorrichtung und die Arbeitseinheit als separate Bauteile modular ausgebildet sind. Dies ermöglicht es, dass die Antriebsvorrichtung zum Antreiben mehrerer unterschiedlicher Vorrichtungen mit jeweils unterschiedlichen Arbeitseinheiten verwendet werden kann. Ein weiterer Vorteil einer derartigen modularen Ausbildung besteht darin, dass sich die Größe der einzelnen Vorrichtungen verringert, da die Vorrichtungen nicht mehr zwangsläufig eine Antriebseinheit aufweisen müssen. Folglich verringert sich auch der insgesamt benötigte Lagerplatz der Vorrichtungen, da diese eine geringe Größe aufweisen und die Antriebseinheit separat von der jeweiligen Vorrichtung aufbewahrt werden kann. Zusätzlich besteht ein Vorteil der Erfindung darin, dass sich die Produktionskosten der einzelnen Vorrichtungen verringern, da die Vorrichtungen beispielsweise ohne Antriebsvorrichtung hergestellt werden können.

Vorteilhaft ist, dass durch Vorsehen einer Trenneinheit zwischen der Antriebsvorrichtung und der Arbeitseinheit eine Verschmutzung der Antriebsvorrichtung vermieden werden kann. Somit muss nach einem Betreiben der Vorrichtung nur noch die Arbeitseinheit gereinigt werden.

Mittels des Koppelelements der Antriebsvorrichtung kann diese erfindungsgemäß in einer Trenneinheit fixiert werden. Das Koppelelement ist dabei so ausgebildet, dass es in eine entsprechende Aussparung der Trenneinheit eingesetzt werden kann. Der Vorteil besteht darin, dass durch die lösbare Befestigung des Koppelelements an der Antriebsvorrichtung, abhängig von der Form der Aussparung der Trenneinheit, ein entsprechend geformtes Koppelelement an die Antriebsvorrichtung angebracht werden kann. Somit erhöht sich die Einsatzmöglichkeit der Antriebsvorrichtung, da diese mittels des Koppelelements in unterschiedlich geformte Aussparungen eingesetzt werden kann.

Einzelheiten der Erfindung werden anhand der Zeichnung näher erläutert, wobei gleich wirkende Elemente mit denselben Bezugszeichen versehen sind. Dabei zeigen:
Fig. 1 eine Explosionsansicht einer Zerkleinerungsvorrichtung,
Fig. 2 eine Schnittansicht einer Antriebsvorrichtung,
Fig. 3 die Zerkleinerungsvorrichtung in einem teilweise zusammengebauten Zustand,
Fig. 4 die Zerkleinerungsvorrichtung im zusammengebauten Zustand.

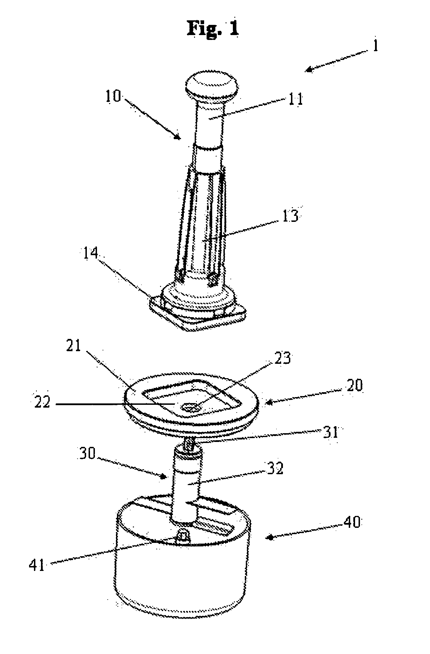

Die in Fig. 1 in einer Explosionsansicht gezeigte Zerkleinerungsvorrichtung 1 weist eine Antriebsvorrichtung 10, eine Trenneinheit 20 und einen Behälter 40 auf. Die Antriebsvorrichtung 10 weist eine verdrehfeste Betätigungsvorrichtung 11, ein Koppelelement 14 und ein zwischen der Betätigungsvorrichtung 11 und dem Koppelelement 14 angeordnetes Gehäuse 13 auf.

Die Betätigungsvorrichtung 11 weist eine Stößelform auf und ist entlang einer Längsachse der Antriebsvorrichtung 10 verschiebbar. Bei einer Bewegung der Betätigungsvorrichtung 11 bewegt sich diese relativ zu dem in Längsrichtung nicht bewegbaren Gehäuse 13. Das Koppelelement 14 ist mit dem Gehäuse 13 lösbar verbunden.

Die Trenneinheit 20 weist ein Trennelement 21 auf, das den Behälter 40 abschließt. Das Trennelement 21 besitzt eine Aussparung 22, die die gleiche Form aufweist wie das Koppelelement 14 der Antriebsvorrichtung 10. Die Aussparung 22 weist eine Öffnung 23 auf, die derart dimensioniert ist, dass eine Koppelvorrichtung 31 einer Arbeitseinheit 30 durch sie gehen kann.

Die Arbeitseinheit 30 weist neben der Koppelvorrichtung 31 ein Arbeitselement 32 auf, das mit der Koppelvorrichtung 31 verbunden ist. Die Koppelvorrichtung 31 ist in dieser Ausführungsform als ein Körper mit einer mehrkantigen Form ausgebildet, kann aber auch andere Formen besitzen. Das Arbeitselement 32 ist in diesem Fall als ein zylindrischer Körper ausgebildet, an dem quer zu seiner Achse verlaufende Zerkleinerungselemente zum Zerkleinern von Lebensmitteln angeordnet sind. Die Arbeitselemente 32 können abhängig von der Vorrichtung anstelle der Zerkleinerungselemente als Rührelemente, Schleuderelemente, Schlagelemente und/oder als andere Werkzeugelemente ausgebildet sein. Die Arbeitseinheit 30 weist auf dem der Koppelvorrichtung 31 entfernten Ende eine Öffnung zum Aufsetzen der Arbeitseinheit 30 auf ein Lagerelement 41 auf. Das Lagerelement 41 ist mit dem Behälter 40 verbunden und dient zur Fixierung der Arbeitseinheit 30. Der Behälter 40 dient zum Aufnehmen der zu verarbeitenden Lebensmittel, Saucen, etc. und ist zylinderförmig ausgebildet, wobei auch andere Formen denkbar sind.

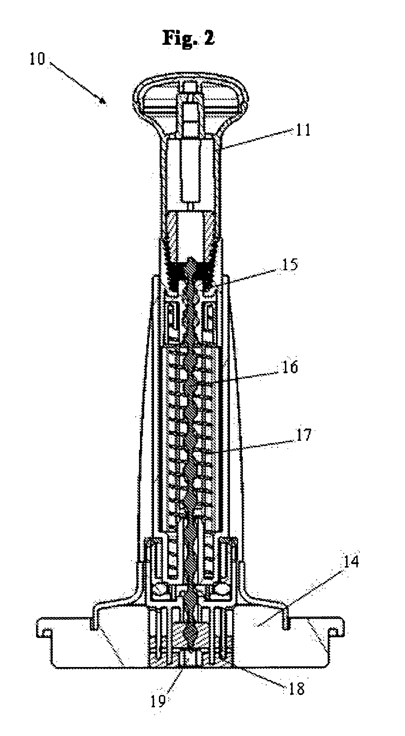

Figur 2 zeigt eine Schnittansicht der Antriebsvorrichtung 10, bei der sich die Betätigungsvorrichtung 11 in einer maximal ausgefahrenen Position befindet. Bei der Antriebsvorrichtung 10 handelt es sich in diesem Fall um eine Spindelantriebsvorrichtung 10. Es sind aber auch andere Antriebsvorrichtungen vorstellbar, die anstelle einer Spindel 16 eine andere Antriebseinheit 16 aufweisen. Aus Figur 2 ist erkennbar, dass die Betätigungsvorrichtung 11, das Gehäuse 13 und das Koppelelement 14 jeweils einen Hohlraum ausbilden. Die verdrehfeste Betätigungsvorrichtung 11 ist mit einer verdrehfesten Dreherzeugungseinheit 15, die als Spindelmutter 15 ausgebildet ist und im Folgenden derart bezeichnet wird, gekoppelt. Die Spindelmutter 15 ist mit der Spindel 16 koppelbar. Genauer gesagt ist die Spindelmutter 15 mit einem Gewinde der Spindel 16 koppelbar. Als Gewinde wird in diesem Fall jede mögliche Ausführung verstanden, die eine Umwandlung einer Längsbewegung in eine Drehbewegung der Spindel 16 ermöglicht. D.h., dass das Gewinde z.B. nicht auf ein Schraubengewinde begrenzt sein soll.

Die Spindelantriebsvorrichtung 10 weist innerhalb des Hohlraums des Gehäuses 13 eine Feder 17 auf, die an einem Ende mit der Spindelmutter 15 verbunden ist. An dem, der Spindelmutter 15 entfernten Ende ist die Feder 17 innerhalb der Spindelantriebsvorrichtung 10 derart angeordnet, dass sie sich bei einer Bewegung der Spindelmutter 15 in Richtung zu dem Koppelelement 14 vorspannen kann. Zusätzlich weist die Spindelantriebsvorrichtung 10 eine in Figur 2 nicht dargestellte Arretiervorrichtung auf. Mittels dieser Arretiervorrichtung kann bei einer Betätigung der Zerkleinerungsvorrichtung 1 die Betätigungsvorrichtung 11 in der betätigten, zusammengedrückten Stellung arretiert und somit eine Bewegung der Betätigungsvorrichtung 11 in die Ausgangsposition verhindert werden.

Die Spindel 16 erstreckt sich über die jeweiligen Hohlräume der Betätigungsvorrichtung 11, des Gehäuses 13 und des Koppelelements 14. Die Spindel 16 ist an ihrem der Betätigungsvorrichtung 11 entfernten Ende mit einer Drehübertragungseinheit 18 gekoppelt. Die Drehübertragungseinheit 18 weist eine zu der mehrkantigen Form der Koppelvorrichtung 31 entsprechende Koppelöffnung 19 auf. Durch eine derartige Form der Koppelöffnung 19 der Drehübertragungseinheit 18 wird sichergestellt, dass die Drehbewegung der Spindel 16 über die Drehübertragungseinheit 18 und die Koppelvorrichtung 31 auf die Arbeitselemente 32 übertragen wird, wenn die Koppelvorrichtung 31 in Eingriff mit der Drehübertragungseinheit 18 ist. Alternativ kann die Drehübertragungseinheit 18 in der Trenneinheit 20 angeordnet sein. In diesem Fall wäre die Drehübertragungseinheit 18 mit der Arbeitseinheit 30 verbunden bzw. gekoppelt und würde an dem der Spindel 16 zugewandten Ende eine Koppelung zum Koppeln mit der Spindel 16 aufweisen. Die Spindel 16 kann mehrere Abschnitte mit jeweils unterschiedlichen Gewindesteigungen aufweisen. Die Anzahl und Ausbildung der Abschnitte hängt von den Anforderungen bezüglich der von der Spindel 16 abzugebenden Drehmomente und/ oder bezüglich der benötigten Drehzahlen der Spindel ab.

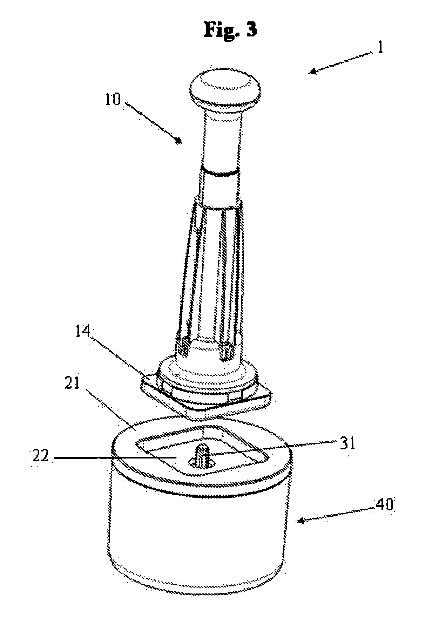

Fig. 3 zeigt die Zerkleinerungsvorrichtung 1 in einem teilweise zusammengebauten Zustand, wobei das Koppelelement 14 der Antriebsvorrichtung 10 noch nicht in die Aussparung des Trennelements 21 eingesetzt wurde. Das Trennelement 21, das beispielsweise als Deckel ausgebildet ist, ist auf den Behälter 40 gesetzt, so dass es diesen abschließt. Ein Teil der Koppelvorrichtung 31 ragt aus der Öffnung 23 der Aussparung 22 heraus.

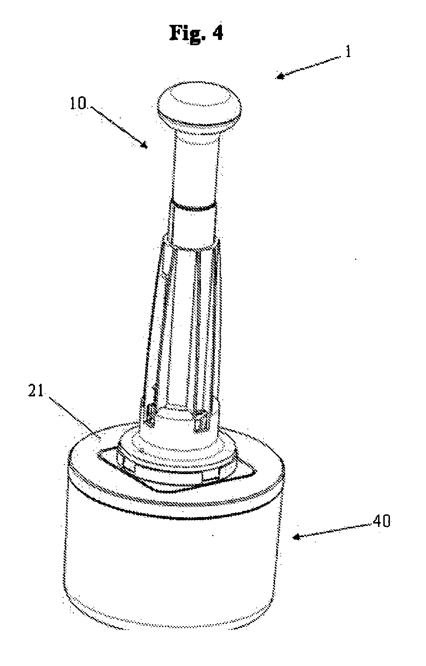

Fig. 4 zeigt die Zerkleinerungsvorrichtung 1 im zusammengebauten Zustand. Das Koppelelement 14 der Spindelantriebsvorrichtung 10 ist in die Aussparung 22 der Trenneinheit 20 eingesetzt. Dabei wird der aus der Aussparung 22 ragende Teil der Koppelvorrichtung 31 mit der Koppelöffnung 19 der Drehübertragungseinheit 18 in Eingriff gebracht. Genauer gesagt wird der aus der Aussparung 22 ragende Teil der Koppelvorrichtung 31 in die Koppelöffnung 19 der Drehübertragungseinheit 18 eingeführt.

Im Folgenden wird der Zusammenbau der Zerkleinerungsvorrichtung 1 beschrieben. Die Arbeitseinheit 30 wird in einem ersten Schritt auf das Lagerelement 41 des Behälters 40 gesetzt, um die Arbeitseinheit 30 innerhalb des Behälters 40 zu fixieren. Im Anschluss daran wird die Trenneinheit 20 zum Abschließen des Behälters 40 an diesen angebracht. Alternativ kann die Trenneinheit 20 fest mit der Arbeitseinheit 30 verbunden sein, so dass der Behälter 40 bereits beim Aufsetzen der Arbeitseinheit 30 auf das Lagerelement 41 abgeschlossen wird. Des Weiteren wird in einem weiteren Schritt überprüft, ob die Form des Koppelelements 14 mit der Form der Aussparung 22 des Trennelements 21 übereinstimmt. Sollte dies nicht der Fall sein, so wird ein entsprechendes Koppelelement 14 mit dem Gehäuse 13 der Spindelantriebsvorrichtung 10 lösbar verbunden. Letztendlich wird das Koppelelement 14 der Spindelantriebsvorrichtung 10 in die Aussparung 22 gesetzt, wobei der aus der Öffnung 23 ragende Teil der Koppelvorrichtung 31 in die Koppelöffnung 19 der Drehübertragungseinheit 18 eindringt.

Im Folgenden wird der Betrieb der Zerkleinerungsvorrichtung 1 durch einen Benutzer beschrieben. Der Benutzer bewegt die Betätigungsrichtung 11 manuell in Richtung zu dem Koppelelement 14. Infolge der Bewegung der verdrehfesten Betätigungsvorrichtung 11 bewegt sich die verdrehfeste Spindelmutter 15 ebenfalls in Richtung zum Koppelelement 14. Genauer gesagt dringt die Betätigungsvorrichtung 11 zuerst in den Hohlraum des Gehäuses 13 ein und kommt dann mit der Spindelmutter 15 in Kontakt. Alternativ ist es vorstellbar, dass die Betätigungsvorrichtung 11 bereits in der unbetätigten Position mit der Spindelmutter 15 in Kontakt steht.

Die Spindel 16 beginnt sich aufgrund des Kontakts der Spindelmutter 15 mit dem Gewinde der Spindel 16 zu drehen. Die Drehbewegung der Spindel 16 wird über die Drehübertragungseinheit 18 auf die Koppelvorrichtung 31 der Arbeitseinheit 30 übertragen. Dadurch wird erreicht, dass die innerhalb des Behälters 40 befindlichen Arbeitselemente 32, wie beispielsweise Zerkleinerungselemente, gedreht werden. Die Spindelmutter 15 wird solange in Richtung zu dem Koppelelement 14 bewegt bis die Spindelmutter 15 und/ oder die Betätigungsvorrichtung 11 gegen ein Anschlagelement stoßen. Durch die Feder 17 kann sichergestellt werden, dass die Spindelmutter 15 und die Betätigungsvorrichtung 11 wieder in die in Figur 1 gezeigte Ausgangslage verschoben werden, falls die Arretiervorrichtung nicht betätigt ist, um dies zu verhindert.

### Bezugszeichenliste

- 1: Zerkleinerungsvorrichtung
- 10: Antriebsvorrichtung/ Spindelantriebsvorrichtung
- 11: Betätigungsvorrichtung
- 13: Gehäuse
- 14: Koppelelement
- 15: Dreherzeugungseinheit/ Spindelmutter
- 16: Spindel/ Antriebseinheit
- 17: Feder
- 18: Drehübertragungseinheit
- 19: Koppelöffnung
- 20: Trenneinheit
- 21: Trennelement
- 22: Aussparung
- 23: Öffnung
- 30: Arbeitseinheit
- 31: Koppelvorrichtung
- 32: Arbeitselement
- 40: Behälter
- 41: Lagerelement

## Patentansprüche

1. Als Zerkleinerungsvorrichtung (1) für Lebensmittel, Rührvorrichtung oder Schleudervorrichtung ausgebildete Vorrichtung mit
• einem Behälter (40),
• einer Antriebsvorrichtung (10), die ein Gehäuse (13), eine antreibbare Antriebseinheit (16) und eine mit der Antriebseinheit (16) gekoppelte Drehübertragungseinheit (18) aufweist,
• einer Arbeitseinheit (30), die sich über eine Koppeleinrichtung (31) lösbar mit der Drehübertragungseinheit (18) in Eingriff befindet,
wobei zwischen der Antriebsvorrichtung (10) und der Arbeitseinheit (30) eine den Behälter (40) abschließende Trenneinheit (20) mit einem, eine Öffnung (23) aufweisenden Trennelement (21), über dessen Öffnung (23) die Koppelvorrichtung (31) in die Drehübertragungseinheit (18) einführbar ist, angeordnet ist und die Arbeitseinheit (30) innerhalb und die Antriebsvorrichtung (10) außerhalb des Behälters (40) angeordnet ist und wobei
die Antriebsvorrichtung (10) an ihrem zur Trenneinheit (20) gerichteten Ende ein lösbar mit der Antriebsvorrichtung verbundenes Koppelelement (14) aufweist, das in eine in der Trenneinheit (20) befindliche Aussparung (22) formschlüssig einsetzbar ist, **dadurch gekennzeichnet, dass**
die Antriebsvorrichtung (10) als Spindelantriebsvorrichtung zum Umwandeln einer Längsbewegung der Betätigungsvorrichtung (11) in eine Drehbewegung der Drehübertragungseinheit (18) ausgebildet ist und eine verdrehfeste Betätigungsvorrichtung (11) zum manuellen Antreiben der Antriebseinheit (16) aufweist und wobei die Betätigungsvorrichtung (11) eine Stößelform aufweist und entlang einer Längsachse der Antriebsvorrichtung (10) relativ zu dem in Längsrichtung nicht bewegbaren Gehäuse (13) verschiebbar ist und das Koppelelement (14) lösbar mit dem Gehäuse (13) verbunden ist.

2. Vorrichtung nach Anspruch 1, **dadurch gekennzeichnet, dass** mittels der Drehübertragungseinheit (18) über die Koppelvorrichtung (31) mindestens ein Arbeitselement (32) antreibbar ist, das als Schlagelement und/ oder Zerkleinerungselement und oder Rührelement und/ oder Schleuderelement und/ oder Werkzeugelement ausgebildet ist.

3. Vorrichtung nach einem der vorhergehenden Ansprüche, **dadurch gekennzeichnet, dass** die Drehübertragungseinheit (18) an dem der Betätigungsvorrichtung (11) entfernten Ende der Antriebseinheit (16) ausgebildet ist.

4. Vorrichtung nach einem der vorhergehenden Ansprüche, **dadurch gekennzeichnet, dass** die Koppelvorrichtung (31) eine Mehrkantform und die Drehübertragungseinheit (18) eine Koppelöffnung (19) mit einer Mehrkantform aufweist.

## Claims

1. A device, which is embodied as comminuting device (1) for food, stirring device or spinning device, comprising
• a container (40),
• a drive device (10), which encompasses a housing (13), a drivable drive unit (16) and a rotational transmission unit (18), which is coupled to the drive unit (16),
• an operating unit (30), which is releasably engaged with the rotational transmission unit (18) via a coupling device (31),
wherein a separating unit (20), which locks the container (40), comprising a separating element (21), which encompasses an opening (23) and via the opening (23) of which the coupling device (31) can be inserted into the rotational transmission unit (18), is arranged between the drive device (10) and the operating unit (30), and the operating unit (30) is arranged inside of and the drive device (10) is arranged outside of the container (40), and wherein,
on its end, which is oriented towards the separating unit (20), the drive device (10) encompasses a coupling element (14), which is releasably connected to the drive device and which can be inserted in a form-locking manner into a recess (22), which is located in the separating unit (20),
**characterized in that**
the drive device (10) is embodied as a spindle drive device for converting a longitudinal movement of the actuating device (11) into a rotational movement of the rotational transmission device (18) and encompasses a torque proof actuating device (11) for manually driving the drive unit (16) and wherein the actuating device (11) encompasses the shape of a plunger and can be displaced along a longitudinal axis of the drive device (10) relative to the housing (13), which cannot be moved in longitudinal direction, and the coupling element (14) is releasably connected to the housing (13).

2. The device according to claim 1, **characterized in that** at least one operating element (32), which is embodied as striking element and/or comminuting element and/or stirring element and/or spinning element and/or tool element, can be driven by means of the rotational transmission unit (18) via the coupling device (31).

3. The device according to one of the preceding claims, **characterized in that** the rotational transmission device (18) is embodied on the end of the drive unit (16), which is spaced apart from the actuating device (11).

4. The device according to one of the preceding claims, **characterized in that** the coupling device (31) encompasses a multi-sided shape and the rotational transmission unit (18) encompasses a coupling opening (19) comprising a multi-sided shape.

## Revendications

1. Dispositif conçu comme un dispositif de fractionnement (1) de produits alimentaires, un dispositif agitateur ou un dispositif d'essorage avec
• un contenant (40),
• un dispositif d'entraînement (10) qui comporte un carter (13), une unité d' entraînement (16) entraînable et une unité de transmission de rotation (18) couplée à l'unité d'entraînement (16),
• une unité fonctionnelle (30) qui est en engagement amovible avec l'unité de transmission de rotation (18), par l'intermédiaire d'un système de couplage (31),
entre le dispositif d'entraînement (10) et l'unité fonctionnelle (30) étant placée une unité de séparation (20) terminant le contenant (40) avec un élément de séparation (21) comportant une ouverture (23), par l'intermédiaire de l'ouverture (23) duquel le dispositif de couplage (31) peut s'introduire dans l'unité de transmission de rotation (18) et l'unité fonctionnelle (30) étant placée à l'intérieur et le dispositif d'entraînement (10) étant placé à l'extérieur du contenant (40) et
sur son extrémité dirigée vers l'unité de sectionnement (20), le dispositif d'entraînement (10) comportant un élément de couplage (14) relié de manière amovible avec le dispositif d'entraînement, qui est insérable par complémentarité de forme dans un évidement (22) se trouvant dans l'unité de séparation (20),
**caractérisé en ce que**
le dispositif d'entraînement (10) est conçu en tant que dispositif d'entraînement par broche, pour transformer un déplacement longitudinal du dispositif de manoeuvre (11) en un déplacement en rotation de l'unité de transmission de rotation (18) et comporte un dispositif de manoeuvre (11) fixe en rotation pour l'entraînement manuel de l'unité d'entraînement (16) et le dispositif de manoeuvre (11) présentant la forme d'un poussoir et étant déplaçable le long d'un axe longitudinal du dispositif d'entraînement (10) par rapport au carter (13) non mobile en direction longitudinale et l'élément de couplage (14) étant relié de manière amovible avec le carter (13).

2. Dispositif selon la revendication 1, **caractérisé en ce qu'**au moyen de l'unité de transmission de rotation (18), par l'intermédiaire du dispositif de couplage (31), au moins un élément fonctionnel (32) qui est conçu en tant qu'élément de battage et/ou d'élément de fractionnement et/ou d'élément agitateur et/ou d'élément d'essorage et/ou d'élément outil peut être entraîné.

3. Dispositif selon l'une quelconque des revendications précédentes, **caractérisé en ce que** l'unité de transmission de rotation (18) est conçue sur l'extrémité de l'unité d'entraînement (16) qui est éloignée du dispositif de manoeuvre (11).

4. Dispositif selon l'une quelconque des revendications précédentes, **caractérisé en ce que** le dispositif de couplage (31) présente une forme polygonale et l'unité de transmission de rotation (18) comporte une ouverture de couplage (19) de forme polygonale.
